Europäisches Patentamt

European Patent Office

Office européen des brevets

(11) Publication number : **0 172 275 B2**

(12) **NEW EUROPEAN PATENT SPECIFICATION**

(45) Date of publication of the new patent specification : **01.07.92 Bulletin 92/27**

(21) Application number : **84304327.4**

(22) Date of filing : **26.06.84**

(51) Int. Cl.⁵ : **A23L 1/226, A23L 1/231, A23L 1/23, A23D 7/00**

(54) Composition suitable for imparting butter and/or animal notes, and method of making same.

The file contains technical information submitted after the application was filed and not included in this specification

(43) Date of publication of application :
**26.02.86 Bulletin 86/09**

(45) Publication of the grant of the patent :
**19.04.89 Bulletin 89/16**

(45) Mention of the opposition decision :
**01.07.92 Bulletin 92/27**

(84) Designated Contracting States :
**AT BE CH DE FR GB IT LI LU NL SE**

(56) References cited :
**DE-A- 1 767 826**
**DE-C- 317 738**
**FR-A- 1 470 924**
**FR-A- 2 012 745**
**FR-A- 2 039 923**
**FR-A- 2 358 110**
**GB-A- 1 133 533**
**GB-A- 1 223 796**
**JP-A-54 080 462**
**JP-A-55 061 780**
**JP-B-81 046 813**
**NL-A- 7 106 263**
**NL-A- 7 317 015**
**US-A- 2 527 785**

(56) References cited :
**US-A- 3 394 017**
**US-A- 3 653 921**
**US-A- 3 780 184**
**US-A- 4 001 437**
**US-A- 4 094 997**
**US-A- 4 133 895**
**US-A- 4 414 229**
**J.E. KINSELLA, Food Technology, May 1975, pp. 82 - 98**
**I. HORNSTEIN in "The Chemistry and Physiology of Flavours", The AVI Publishing Company, Inc. 1967, chapter 10**

(73) Proprietor : **FRIES & FRIES, INC.**
**1199 Edison Drive**
**Cincinnati, Ohio 45216 (US)**

(72) Inventor : **Sexton, James E.**
**9154 Coach Trail Lane**
**Cincinnati, OH 45242 (US)**
Inventor : **Prinz, William J.**
**408 McClure**
**Lebanon, OH 45036 (US)**
Inventor : **Dvoretsky, Margaret**
**9111 Peachblossom Court**
**Cincinnati, OH 45231 (US)**

(74) Representative : **Allen, Oliver John Richard et al**
**Lloyd Wise, Tregear & Co. Norman House**
**105-109 Strand**
**London, WC2R 0AE (GB)**

EP 0 172 275 B2

## Description

The employment of flavoring substances to enhance the palatability of foodstuffs is well-known and has long been common practice in commercial, home, industrial and institutional environments. In particular, flavoring substances capable of imparting to foodstuffs a savory smell, taste and mouthfeel resembling that of natural meats are very desirable. Unfortunately, the application of such meat-like flavoring substances designed to impart desirable smell, taste, and mouthfeel have been limited and inhibited due to unfavorable factors such as cost, stability and convenience. For example, flavoring substances containing actual meat components may be impracticable due to cost or susceptibility to deterioration upon storage. Moreover, utilization of sterilization or other preservation techniques may deleteriously affect the actual meat components contained therein adversely compromising the desired natural meaty-flavor.

In the past, there have been several flavoring substances developed which attempt to not only reproduce natural meat flavor but to overcome the problems referred to above as well. For instance, it was common practice to employ artificial meat-like flavoring substances which have relied heavily upon a spectrum of spices or meat extracts to reproduce and impart meat-like flavors to foodstuffs. Unfortunately, such techniques have been less than desirable. The spice compositions generally have failed to develop natural meaty-flavors whereas the meat extracts have encountered cost, processing, and stability disadvantages.

Heretofore, it is well known to enhance the natural meaty-flavors of foodstuffs with fatty materials, carbohydrates, amino acids and other non-amino acid like substances. In particular, two such examples are described in U. S. Patents Nos. 3,493,395 and 3,532,514, which employ a mixture of an amino acid, a carbohydrate and a fatty material such as fatty acids and fatty acid triglycerides to impart meat flavor to foodstuffs. Another example, as set forth in U. S. Patent No. 3,519,437 discloses meat flavoring substances obtained from a reaction product between 2-aminoethane sulfonic acid and thiamine and optional ingredients such as a source of amino acids derived from proteins, hydrolyzed proteins, free amino acids and the like. Still another example is described in U. S. Patent No. 3,532,515 wherein artificial meat flavoring substances are produced by reacting at elevated temperatures a ribose moiety containing substance, preferably a nucleotide, with an amino acid in the presence of water. If desired, specific aldehydes in combination with methyl sulfide may subsequently be added thereto. Still another well known technique employs deep-fat frying as a means to impart meaty-flavors to foodstuff materials fried therein. In U. S. Patent No. 4,169,901, a meaty-flavored deep-fat frying substance is disclosed which involves a mixture of a triglyceride based fat having acyl groups, a volatile artificial meat-flavor component, and a stabilizing agent to decrease devolatilization of the flavored base fat upon heating. There are also those methods which employ enzymes to enhance the meaty-flavor of foodstuffs. For instance, U. S. Patent No. 4,058,631, discloses a process to improve the flavor and texture of foodstuffs whereby foodstuffs are soaked in an aqueous solution containing alpha amylase prior to frying. In U. S. Patents Nos. 3,857,968 and 3,968,855, the palatability of animal foods is enhanced with a flavoring substance containing a fat and protein which has been conditioned by emulsification and treating the resultant emulsion with an enzyme composition of lipase and protease. In order to achieve the flavoring substance, however, the mixture is exposed to elevated temperatures to maintain the necessary enzymatic reactions. Still further, it has been suggested in Crocco, S.: New Way to Modify Flavor. Food Engineering International. 1(9):9-10, 12 (September 1976) that a food flavor can be produced by the interaction of specific enzymes with specific chemical substrates. For example, enzyme modified cheese products have been employed to fortify or intensify cheddar cheese flavor in a formula. Still further, there are those methods which provide flavoring substances which not only impart meaty-flavor to foodstuffs but mouthfeel as well. In U. S. Patents Nos. 4,076,852 and 4,082,565, techniques to impart meaty-flavor and mouthfeel are disclosed therein which employ a mixture of egg or enzymatic digest thereof, poultry meat or other meat powders or enzymatic digests thereof, as well as sulfur compounds and other free amino acids and/or polypeptides to accomplish the above. U. S. Patent No. 4,001,437 describes an enzyme modified full cream milk which in heated facultatively with fats. The obtained product can be worked into a mount bread dough and the thus aromatised bread tartes much fresher and still has the fresh flavour after several darp.

It is apparent from the above brief overview directed to flavoring substances that there are continuing needs in commercial, home, industrial and institutional areas to provide flavoring substances which are capable of imparting to foodstuffs different flavors and mouthfeel that more closely resemble or intensify natural flavors and can be stored for an appreciable period of time without experiencing rancidification, contamination or deterioration.

In accordance with one aspect of the invention, a method for preparing a flavoring substance having butter and/or animal notes comprises mixing an enzyme modified milk-fat and a fatty material, and heating the resulting mixture until the milk-fat is substantially mixed with the fatty material whereby a flavouring substance having the capability to impart butter and/or animal notes to feedstuffs is procuded

In accordance with another aspect of the invention, a deep-fat frying composition suitable for imparting butter and/or animal notes to foodstuffs fried therein comprises an enzyme modified milk-fat and a fatty material.

This invention provides flavoring substances and methods of making the same which are adapted to impart to foodstuffs a more natural and intensified flavor having butter and/or animal notes. Significantly, butterlike flavors having animal or meat notes and intensified mouthfeel are also achieved. The novel flavoring substances comprise an enzyme modified milk-fat and a fatty material wherein each are in an amount proportioned to render the desired butter flavor and mouthfeel with animal or meaty notes, if desired. The novel methods of making the flavoring substances enable said substances to be stored for an appreciable period of time without undergoing rancidification, contamination or deterioration. Thus, in following the teachings of this invention, flavoring substances can be prepared into ready-to-use form inadvance and stored for subsequent and on demand use with foodstuffs such as fast, frozen, instant and snack foods.

Preferably, the flavoring substances derive their more natural butter and animal flavors and mouthfeel from an enzyme modified milk-fat and a fatty material when derived from animal fats, respectively, and if desired other optional flavoring agents. In formulating these novel flavoring substances, an enzyme modified milk-fat is mixed with a fatty material at amicable temperatures. The enzyme modified milk-fat preferably is selected from the group consisting of enzyme modified butter, enzyme modified butter oil, enzyme modified cheese, enzyme modified cream, or any mixtures or equivalents thereof. The fatty material preferably is selected from the group consisting of fatty acids and fatty acid glycerides. When a flavoring substance having flavor and mouthfeel that more closely resembles natural meat is desired, the preferred fatty material may be selected from the group consisting of bacon grease, fatty-pork tissue, fatty-poultry tissue, suet, tallow or any mixtures or equivalents thereof. The optional flavoring agents which may be added to these novel flavoring substances preferably are selected from the group consisting of sulfur-containing compounds, amino acids or any mixtures thereof. Further, these novel flavoring substances according to this invention may contain preservatives if so desired.

In accordance with one aspect of the invention, natural butter and/or desired animal notes/flavors and mouthfeel derived from these novel flavoring substances are imparted to foodstuffs. Basically, to accomplish the above, these flavoring substances can be mixed, cooked, fried, or any other equivalent means in sufficient amounts with a selected foodstuff to impart the desired intensity of flavor and mouthfeel to said foodstuff. Thus, in accordance with the present Invention, a more intensified, natural butter and/or desired animal flavor and mouthfeel may be imparted to foodstuffs at lower costs, increased stability and greater convenience.

The invention will now be described with reference to the following general examples.

In a presently preferred form, the novel flavoring substances of this invention are adapted to impart butter and/or animal notes to foodstuff materials. In essence, this invention is directed to the use of an enzyme modified milk-fat and a fatty material which constitutes the integral part of a flavor system having butter flavor and mouthfeel. Further, when the fatty material is derived from animal fat, a tallow flavor and mouthfeel may be imparted to foodstuffs as well. With more particularity, the novel flavoring substances of this invention comprise a product produced by a method which comprises the steps of mixing an enzyme modified milk-fat and a fatty material and heating the mixture to provide a flavoring substance having butter notes.

In the specification, the term "butter notes" refers to those characteristics of flavors provided in accordance with this invention which have an intensified natural mouthfeel, taste and smell of butter derived from milk-fat. Thus, the flavoring substances of this invention are adapted to confer to foodstuffs flavors, mouthfeel and smell characteristics which more closely resemble and intensify those of natural butter flavors and, if desired, such flavors having meat notes. "Notes" is a term which generally refers to the taste, smell and mouthfeel of a desired flavor. Further, reference is made throughout the specification to "fatty materials" which include both solid and liquid edible fatty materials.

The novel flavoring substances of this invention comprise a fatty material selected from the group consisting of fatty acids and fatty acid glycerides or equivalents thereof. In the specification, the terms "oil" and "fats" are used synonomously. Fats, however, may include hard fats selected from animal fats and vegetable and fish oils. Preferred hard fats may be selected from babassu oil, bacon grease, coconut oil, corn oil, cottonseed oil, fatty-pork tissue, fatty-poultry tissue, lard, palm oil, palm kernel oil, rapeseed oil, shortenings, safflower oil, suet, sunflower oil, tallow or any mixtures or equivalents thereof. It is to be understood, however, that the fatty material can have liquid oils intimately mixed with hard fats so long as the blend meets the overall qualifications as a fatty material that can be used to formulate the fatty material of this invention. Preferred liquid oils are corn oil, cottonseed oil, olive oil, peanut oil, rape seed oil, safflower oil, shortenings, soybean oil, sunflower oil, vegetable oil, or any mixtures or equivalents thereof and most preferably cottonseed oil and vegetable oil. Thus, the edible fats to be used in the fatty material of this invention can be selected from the group consisting of fatty acids and fatty acids glycerides or the like. In accordance with a further preferred embodiment

EP 0 172 275 B2

of this invention, it is to be understood that when it is desirable to confer animal notes to foodstuff materials, the preferred fatty materials may be selected from those fats derived from animals. In particular, the animal fats may be selected from the group consisting of bacon grease, fatty-pork tissue, fatty-poultry tissue, suet, tallow, or any mixtures or other suitable equivalents thereof. In keeping with the invention, the fatty material may comprise blends of fats derived from animal fats and vegetable oils or the like. The exact nature or amount of the blend itself is not critical as long as the same is capable of imparting to foodstuffs closely resembled flavor, mouthfeel and smell of natural animal notes when desired.

The novel flavoring substances further comprises an enzyme modified milk-fat preferably in an amount of about 1% to about 50% by weight of the flavoring substance. The term "enzyme modified milk-fat" as used herein, refers to denatured reaction products of enzymes derived from dairy fats. Such enzyme modified milk-fats generally are."cheese-like" in nature, i.e., they characteristically have a texture similar to creamy paste or whipped butter and are very aromatic. Examples of enzyme modified milk-fats that may be employed according to the principles of this invention include lipolyzed dairy fats such as lipolyzed butter oil, lipolyzed cream or the like. Preferably, however, the enzyme modified milk-fat is selected from the group consisting of enzyme modified butter, enzyme modified butter oil, enzyme modified cheese, enzyme modified cream or any mixtures or equivalents thereof, and most preferably enzyme modified butter oil and enzyme modified cheese. In further keeping with the invention, any dairy fat or the like that has been modified or denatured by means other than enzymes may also be employed in combination with the enzyme modified milk-fat to confer the desirable buttery flavor and mouthfeel to foodstuffs.

The use of an enzyme modified milk-fat and a fatty material in these novel flavoring substances provides several advantages. The unique combination imparts stability to the flavoring substances enabling them to be prepared in advance and stored for an appreciable period of time without undergoing significant rancidification or deterioration. It is desirable, however, to refrigerate these novel flavoring substances when not in use. Further, as cited above, by reacting an enzyme modified milk-fat with a fatty material, a unique and desirable buttery flavor and mouthfeel can be conferred to foodstuffs. When the fatty material selected is derived from animal fats, the flavor substances will simultaneously impart to foodstuffs a buttery and animal flavor, mouthfeel and smell. For example, when the fatty material component comprises blends of animal fats or animal and vegetable fats used in frying foods, such as french fried potatoes, the use of these novel flavoring substances will confer to the fried product a unique buttery flavor and mouthfeel with an intensified animal flavor and mouthfeel enhancing their overall consumer appeal. Further, if so desired, the amount of animal fat required in the present animal-vegetable blends used to fry foodstuffs can be reduced by incorporating therein, one or more of the novel flavoring substances of this invention, e.g., an enzyme modified milk-fat with an animal fat, without sacrificing the desired animal notes conferred to the foodstuffs and thereby lowering production costs of these flavoring substances. Still further, the physical characteristics of these novel flavoring substances enable them to be conveniently incorporated with foodstuffs such as fast, frozen, instant and snack foods to impart the desired flavor and mouthfeel. Thus, dependent upon the amount and type of fatty material selected will determine the intensity and type of notes being imparted to foodstuffs.

Optional flavoring agents and preservatives may be intimately mixed with these flavoring substances. For instance, the flavoring substances may be further adapted to impart animal flavors to foodstuff material comprising a product derived from mixing the flavoring substances with a sulfur-containing compound in an amount sufficient to impart the desired intensity of the flavor and heating until a flavoring substance having the capability to impart animal flavor and butter notes is produced. By the term "sulfur-containing compound" it refers to sulfur-containing amino acids, lower alkyl mercaptans, lower alkyl sulfides, lower alkyl disulfides, amino alkane sulphonic acids or salts thereof, e.g., the sodium salt of amino ethane sulphonic acid (taurine), inorganic salts thereof, hydrogen sulphide or any combination thereof. Such inorganic sulfur compounds may be designated herein as having the formula $MS_x$, wherein M is selected from the group consisting of an alkaline metal (e.g., sodium or potassium), an alkaline earth metal (e.g., calcium or magnesium), and ammonium and $S_x$ is selected from the group consisting of sulfide, polysulfide and sulfhydrate.

When hydrogen sulfide or a lower alkyl mercaptan is used, it is necessary to control the amount used so as to avoid over-powering the aroma of the product with the aroma of the mercaptan or the hydrogen sulfide. The lower alkyl mercaptans and sulfides preferably contain from 1 up to 6 carbon atoms. The lower alkyl disulfides preferably contain 1 to 3 carbon atoms. Cysteine, cystine, methionine, thiamine, taurine, or any mixtures thereof and their acid salts, such as cysteine hydrochloride, are especially preferred sulfur-containing compounds.

Cysteine and cystine are sulfur-containing amino acids readily available as free amino acids or as salts, both acid and basic. Preferably, the acid salts, especially the halogen acid salts, such as the hydrochloride, are utilized. The inorganic sulfur-containing compounds mentioned above include sodium sulfhydrate and sodium sulfide. Instead of sodium compounds, corresponding compounds of potassium, calcium, and

4

ammonium or substituted ammonium may be used. Any such compound employed, however, must be capable of mixing with the flavoring substances to give the desired specific natural meat flavor.

Other organic sulfur-containing compounds useful in the practice of this invention include methylmercaptan, ethylmercaptan and propylmercaptan, dimethylsulfide, dimethylsulfide and methylethylsulfide.

The term "sulfur-containing compounds" as used herein is intended to include thiamine or thiamine precursors or acidic or basic salts of thiamine. Such thiamine salts or precursors of thiamine or thiamine per se, however, are used preferably in addition to other "sulfur-containing compounds" of this invention.

Similarly, the flavoring substances may be further adapted to impart animal flavor to foodstuffs comprising a product derived from further mixing said flavoring substances with an amino acid in an amount effective to impart the desired intensity of flavor and heating until a flavoring substance having the capability to impart animal flavor and butter notes is produced. Preferably, the amino acids may be selected from the group consisting of alanine, arginine, aspartic acid, glutamic acid, glycine, histidine, iso-leucine, leucine, lysine, phenylalanine, proline, serine, tryptophan, tyrosine, valine, or any mixtures thereof and most preferably alanine. In carrying out this feature of the invention, the source for the amino acids may include proteins, hydrolyzed proteins, free amino acids, or as acids, both acid and basic or any other natural or synthetic suitable sources. Preferable, as with cysteine, the acid salts, especially the halogen acid salts, are employed. It is to be understood in accordance with the embodiments of this invention, that the sulfur-containing compounds or amino acids may be intimately mixed independent of each other or in any mixtures thereof with the flavoring substances. Still further, when the fatty material is selected from animal fats, these novel flavoring substances are capable of imparting animal flavor and animal and butter notes to foodstuffs.

Additionally in keeping with this invention, if desired, preservatives such as BHA and BHT may be incorporated into the novel flavoring substances of this invention without departing from the scope or spirit.

In another preferred embodiment, the flavoring substances are useful as deep-fat frying compositions for imparting butter notes and when desired animal notes to foodstuffs fried therein. As described herein, the animal and butter notes are derived from the fatty materials, especially bacon grease, fatty-pork tissue, fatty-poultry tissue, suet, tallow or any mixtures or equivalents thereof and enzyme modified milk-fat, respectively. The novel flavoring substances of the present invention can therefore be utilized in any number of deep-fat frying operations or with any number of foodstuffs to impart to the foodstuffs deep-fried therein, butter notes or animal and butter notes for extended frying periods. The term "deep-fat frying" refers to the cooking of foodstuffs which are partially or completely immersed in a deep-fat frying composition flavored with the flavoring substances of the present invention. Thus, deep-fat frying operations typically practiced in the home and in commercial, industrial or institutional cooking operations are contemplated within the method of the present invention. The repeated cycles of deep-fat frying operations conventionally practiced in restaurant and fast food cooking are likewise contemplated. Also in accordance with the invention, these flavoring substances may alternatively be mixed, cooked, or the like with foodstuffs to impart butter notes or animal and butter notes thereto.

In a further preferred embodiment, this invention contemplates flavored foodstuffs having butter notes or animal and butter notes which comprises the novel flavoring substances described herein mixed with foodstuffs in an amount effective to impart the desired intensity of notes. In keeping with this invention, foodstuffs may be selected from the group consisting of carbohydrates, proteins or any mixtures thereof. For example, such foodstuffs may include bacon, beef, cheese, cheese products, corn products, dehydrated potatoes, dough, eggs, fish, ice cream, margarine, milk, milk products, mutton, pork, potatoes, potato products, poultry, veal, or vegetables. In particular these flavoring substances are advantageously combined with snack foods, such as cheese twists, corn curls, potato chips or the like, fast foods, such as french fries and instant foods, such as potato flakes to impart butter notes or animal and butter notes thereto. As previously described, the flavor substances mixed with foodstuffs may further contain optional meat flavoring compounds to intensify the meaty-flavor being conferred thereto. Further, in accordance with this invention, foodstuffs and the flavoring substances may be contained in amounts to provide a flavored foodstuff with a desired flavor having reduced calories.

In another preferred embodiment, the novel flavoring substances of this invention may be produced by a method comprising the steps of mixing an enzyme modified milk-fat and a fatty material and heating the mixture to provide a flavoring substance having butter notes. More particularly, the method comprises the steps of (a) mixing a mixture comprising an enzyme modified milk-fat selected from the group consisting of enzyme modified butter, enzyme modified butter oil, enzyme modified cheese, enzyme modified cream, or any mixtures thereof in an amount of about 1% up to about 50% by weight of said mixture and a fatty material selected from the group consisting of fatty acids and fatty acid glycerides and (b) heating the resulting mixture at a temperature of about 50° C up to about 300° C until said milk-fat is substantially mixed with said fatty material whereby a flavoring substance having the capability to impart butter notes to foodstuffs is produced. In keeping with the methods disclosed herein, the fatty material may be initially heated at a temperature of about 50° C up to about 300° C and cooled prior to mixing therewith the enzyme modified milk-fat. The objective behind initially preheating the fatty material and cooling is to minimize the amount of burning experienced by the enzyme modified milk-fats thereby improving the quality of flavor. Further, it is believed that by mixing the enzyme modified milk-fats as well as the optional flavoring compounds with the fatty materials at elevated temperatures, the solubility of the enzyme modified milk-fats and flavoring compoundings are increased resulting in better migration and dispersion throughout the fatty materials. In still keeping with the present invention, it is preferred but not necessary to filter the flavoring substances after heating. It is believed that by filtering these substances undesirable burned materials, such as carbonaceous materials, are removed enhancing the overall flavor and appeal of the flavoring substances.

There are additionally other adverse factors which can effect the stability of these flavoring substances, such as moisture, contributing to their rancidification, contamination and deterioration. Thus, in keeping with this invention to provide a stable product that may be prepared in advance in ready-to-use form for subsequent and on demand use, it is desirable to further heat the mixture until it is substantially moisture free. Further, these flavoring substances may be very aromatic and highly offensive due to the presence of short chain acids consisting of about 3 carbons to about 8 carbons, such as butyric acid. Thus, to reduce or eliminate these undesirable short chain acids from the flavoring substances, the methods of this invention further contemplate subjecting these flavoring substances to an additional step of volatization or in the alternative solvent extraction, e.g., alcohol or other satisfactory solvents, or the like as suitable means to remove the short chain acids present therein.

Further in accordance with the novel methods of this invention to enhance the meaty-flavor of the substances, additional flavoring agents, such as the sulfur-containing compounds or amino acids or any mixtures thereof described previously herein, may be added and heated therewith. It is desirable to further heat these mixtures to insure proper distribution of the optional flavoring compounds throughout the mixtures as discussed.

The invention will now be described with reference to the following specific examples, which illustrate the preparation of flavoring substances, flavored foodstuffs and their formulations.

EXAMPLES

The following flavoring substances have been prepared and were generally stable at room temperature, but preferably were stored in a refrigerator when not in use to minimize rancidification, contamination and deterioration.

EP 0 172 275 B2

## TABLE

| Flavor Substance | Quantity of Enzyme Modified Milk-Fat | Quantity of Fatty Material | Quantity of Sulfur-Containing Compound | Quantity of Amino Acid | Quantity of Preservative |
|---|---|---|---|---|---|
| A | 150 gms. LBO | 150 gms. beef suet | ---- | --- | --- |
| B | 400 gms. LBO | 400 gms. beef suet | --- | --- | --- |
| C | 1000 gms. LBO | 5000 gms. grinded beef suet | --- | --- | 0.6 gms. BHA |
| D | 110 gms. EMC | 5000 gms. cotton seed oil | 22.8 gms. cysteine | 58 gms. alanine | 0.6 gms. BHA |
| E | 110 gms. LBO | 5000 gms. grinded beef suet | 5.7 gms. cysteine | 29 gms. alanine | 0.5 gms. BHA |
| F | 50 gms. EMC | 5000 gms. grinded beef suet | --- | --- | 0.5 gms. BHA |
| G | 100 gms. EMC | 5000 gms. grinded beef suet | --- | --- | 0.5 gms. BHA |
| H | 110 gms. EMC | 5000 gms. grinded beef suet | --- | --- | 0.5 gms. BHA |
| I | 132 gms. EMC | 6000 gms. grinded beef suet | 6.8 gms. cysteine | 34.2 gms. alanine | 0.6 gms. BHA |
| J | 187 gms. EMC | 8500 gms. grinded beef suet | 9.6 gms. cysteine | 49.3 gms. alanine | 0.86 gms. BHA |

EP 0 172 275 B2

## TABLE (cont'd)

| Flavor Substance | Quantity of Enzyme Modified Milk-Fat | Quantity of Fatty Material | Quantity of Sulfur-Containing Compound | Quantity of Amino Acid | Quantity of Preservative |
|---|---|---|---|---|---|
| K | 110 gms. EMC | 5000 gms. vegetable oil | 5.7 gms. cysteine | 29 gms. alanine | 0.5 gms. BHA |
| L | 110 gms. EMC | 5000 gms. vegetable oil | 11.4 gms. cysteine | 58 gms. alanine | 0.5 gms. BHA |
| M | 110 gms. EMC | 5000 gms. vegetable oil | 22.8 gms. cysteine | 58 gms. alanine | 0.5 gms. BHA |
| N | 330 gms. EMC | 5000 gms. vegetable oil | 57 gms. cysteine | 290 gms. alanine | 0.5 gms. BHA |
| O | 77.44 gms. EMC | 3520 gms. lard | 4.01 gms. cysteine | 20.4 gms. alanine | 0.35 gms. BHA |
| P | 1000 gms. LBO | 5000 gms. grinded beef suet | --- | --- | 0.6 gms. BHA |
| Q | 132 gms. EMC | 6000 gms. grinded beef suet | 6.8 gms. cysteine | 14.8 gms. alanine | 0.6 gms. BHA |
| R | 300 gms. EMC | 1200 gms. vegetable oil | --- | --- | --- |
| S | 300 gms. EMC | 1200 gms. vegetable oil | --- | --- | --- |
| T | 300 gms. LBO | 1200 gms. vegetable oil | --- | --- | --- |

TABLE (cont'd)

| Flavor Substance | Quantity of Enzyme Modified Milk-Fat | Quantity of Fatty Material | Quantity of Sulfur-Containing Compound | Quantity of Amino Acid | Quantity of Preservative |
|---|---|---|---|---|---|
| U | 300 gms. LBO | 1000 gms. vegetable oil | --- | --- | --- |
| V | 20 gms. EMC | 380 gms. vegetable oil | --- | --- | --- |

EMC - enzyme modified cheese.
LBO - lipolyzed butter oil.

EP 0 172 275 B2

## EXAMPLE I

This example contemplates the method used to make flavor substances A or B. Into a flask equipped with a stirrer, thermometer and heating mantle, the enzyme modified milk-fat and the fatty material of flavoring substances A or B were placed. The contents of the flask were refluxed for about one hour at a temperature of about 100°C. Therefore, a substantial amount of water was distilled off through a roto vacuum evaporated at a temperature of about 50°C and at a pressure of about 35 mm Hg (46,7 mbar)

## EXAMPLE II

This example contemplates the method used to make flavor substance C. Into a flask equipped with a stirrer, thermometer and heating mantle, the enzyme modified milk-fat and the fatty material of flavoring substance C were placed. The contents of the flask were heated to a temperature of about 280°F (138°C). Thereafter, the contents of the flask were chilled to a temperature of about 150°F (66°C) and the preservative was added. The resultant mixture was then filtered.

## EXAMPLE III

This example contemplates the method used to make flavor substances D through N. Into individual flasks equipped with a stirrer, thermometer and heating mantle, the enzyme modified milk-fat, the fatty material and, if appropriate, the sulfur-containing compound and the amino acid of flavoring substances D through N were placed. The contents of each fask were heated to a temperature of about 280°F (138°C) Thereafter, the contents of each flask were chilled to a temperature of about 190°F (88°C) and the preservative was added. All of the resultant mixtures except for E were then filtered through a cheese cloth. Flavor substance E was not filtered. Flavor substances I and J were heated to a temperature of about 280°F (138°C) for about 28 minutes and 32 minutes, respectively. The chilling time for both flavor substances I and J was about 18 minutes.

## EXAMPLE IV

This example contemplates the method used to make flavor substance O. Into a flask equipped with a stirrer, thermometer and heating mantle, the enzyme modified milk-fat, the fatty material, the sulfur-containing compound and the amino acid of flavor substance O were placed. The contents of the flask were heated to a temperature of about 270°F (132°C). Thereafter, the contents of the flask were chilled to a temperature of about 190°F (88°C) and the preservative was added. The resultant mixture was then filtered.

## EXAMPLE V

This example contemplates the metod used to make flavor substance P. Into a flask equipped with a stirrer, thermometer and heating mantle, the fatty material of flavor substance P was placed. The fatty material in the flask was heated to a temperature about 280°F (138°C). Thereafter, the fatty material was chilled to a temperature of about 265°F (129°C) and the enzyme modified milk-fat was added. Subsequently, the contents of the flask were further chilled to a temperature of about 190°F (88°C) and the preservative was added. The resultant mixture was then filtered.

## EXAMPLE VI

This example contemplates the method used to make flavor substance Q. Into a flask equipped with a stirrer, thermometer and heating mantle, the fatty material of flavor substance Q was placed. The fatty material in the flask was heated to a temperature of about 280°F (138°C). Thereafter, the fatty material was chilled to a temperature of about 230°F (110°C) and the enzyme modified milk-fat, the sulfur-containing compound and the amino acid were added. Subsequently, the contents of the flask were further chilled to a temperature of about 180°F and the preservative was added. The resultant mixture was then filtered.

## EXAMPLE VII

This example contemplates the method used to make flavor substance R. Into a flask equipped with a stirrer, thermometer and heating mantle, the enzyme modified milk-fat and the fatty material of flavor substance R were placed. The contents of the flask were heated to a temperature of about 140°C. Thereafter, the resultant mixture was then filtered.

EXAMPLE VIII

This example contemplates the method used to make flavor substance S. Into a flask equipped with a stirrer, thermometer and heating mantle, the enzyme modified milk-fat and the fatty material of flavor substance S were placed. The contents of the flask were heated to a temperature of about 115°C. Thereafter, the resultant mixture was then filtered.

EXAMPLE IX

This example contemplates the method used to make flavor substance T or U. Into a flask equipped with a stirrer, thermometer and heating mantel, the enzyme modified milk-fat and the fatty material of flavor substance T or U were placed. The contents of the flask were heated to a temperature of about 125°C. The resultant mixture of flavor substance T was then filtered. Flavor substance U was not filtered.

EXAMPLE X

This example contemplates the method used to make flavor substance V. Into a flask equipped with a stirrer, thermometer and heating mantle, the enzyme modified milk-fat and the fatty material of flavor substance V were added. The contents of the flask were heated to a temperature of about 80 to 90°C for about 30 minutes. The resultant mixture was then filtered.

The following flavored foodstuffs have been prepared from a foodstuff and a flavoring substance produced above.

EXAMPLE XI

This example contemplates a flavored pepperoni foodstuff which was made from 120 gms. of ground bacon and 234 gms. of flavor substance H which was melted and mixed together. The resultant mixture was blended with optional flavoring agents.

EXAMPLE XII

This example contemplates a flavored cheese and bacon foodstuff which was made from 25 gms. of melted bacon and 25 gms. of flavor substance H which was melted and mixed together. The resultant mixture was blended with 50 gms. of cheese powder.

EXAMPLE XIII

This example contemplates a flavored cheese and pepperoni foodstuff which was made from 15 gms. of pepperoni flavor and 35 gms. of flavor substance H which was melted and mixed together. The resultant mixture was blended with 50 gms. of cheese powder.

EXAMPLE XIV

This example contemplates a butter flavored foodstuff which was made from 65.5 gms. of flavor substance T which was melted and mixed with 5 gms. of Diacetyl and 14 gms. of coconut extract.

EXAMPLE XV

This example contemplates a flavored italian sausage foodstuff which was made from 50 gms. of smooth fatty bacon and 250 gms. of flavor substance H which were melted and mixed together. The resultant mixture was blended with optional flavoring agents.

EXAMPLE XVI

This example contemplates flavored potato flake foodstuff which was made from 650 gms. of artificial natural potato flavor and 325 gms. of flavor substance G which were mixed together.

EXAMPLE XVII

This example contemplates flavored processed dehydrated potato foodstoff which was made from 150 gms. of potato granules, 0.3 gms. of flavor substance G, 430 gms. of water and 4.5 gms. of yeast. The resultant mixture was blended with an optional flavoring agent.

EXAMPLE XVIII

This example contemplates flavored frozen french fried potatoes which derived their flavor from a blended animal-vegetable frying fat, 0.3% flavored substance G and other optional flavoring agents. The frozen potatoes were deep-fat fried in the mixture to impart to the potatoes the flavor.

EXAMPLE XIX

This example contemplates flavored french fried potatoes which derived their flavor from a mixture comprising 1000 gms. of a blended animal-vegetable frying fat, 20 gms. of flavor substance P and other optional flavoring agents. The potatoes were deep-fat fried in the mixture to impart to the potatoes the flavor.

EXAMPLE XX

This example contemplates flavored french fried potatoes which derived their flavor from a mixture comprising 1000 gms. of wesson oil, 10 gms. of flavor substance I and other optional flavor agents. The potatoes were deep-fat fried in the mixture to impart to the potatoes the flavor.

EXAMPLE XXI

This example contemplates flavored french fried potatoes which derived their flavor from a mixture comprising 1000 gms. of wesson oil, 20 gms. of flavor substance I and other optional flavor agents. The potatoes were deep-fat fried in the mixture to impart to the potatoes the flavor.

EXAMPLE XXII

This example contemplates flavored french fried potatoes which derived their flavor from a mixture comprising 1000 gms. of wesson oil, 20 gms. of flavor substance P and other optional flavoring agents. The potatoes were deep-fat fried in the mixture to impart to the potatoes the flavor.

**Claims**

1. A method for preparing a flavoring substance having butter and/or animal notes comprising mixing an enzyme modified milk-fat and a fatty material, and heating the resulting mixture until the milk-far is substantially mixed with the fatty material whereby a flavouring substance having the capability to impact butter and/or animal notes to feedstuffs is produced

2. A method as claimed in Claim 1 further comprising heating until the mixture is substantially moisture free.

3. A method as claimed in either Claim 1 or 2 further comprising volatizing the mixture until the mixture is substantially free of short chain acids consisting of about 3 carbons up to about 8 carbons.

4. A method as claimed in any preceding Claim further comprising extract from the mixture short chain acids consisting of about 3 carbons up to about 8 carbons with a solvent.

5. A method as claimed in any preceding claim which further comprises (a) mixing a mixture comprising an enzyme modified milk-fat in an amount of about 1% up to about 50% by weight of the mixture and a fatty material, and (b) heating the resulting mixture at a temperature of about 50°C up to about 300°C until the milk-fat is substantially mixed with the fatty material

6. A method as claimed in any preceding Claim comprising adding a sulfur-containing meat flavoring compound and/or an amino acid to the mixture, and heating until a meat flavor is developed.

7. A deep-fat frying composition suitable for imparting butter and/or animal notes to foodstuffs fried therein comprising an enzyme modified milk-fat and a fatty material.

8. A flavored foodstuff having butter and/or animal notes comprising a flavoring substance produced by the method as claimed in any one of Claims 1 to 6 mixed with a foodstuff in an amount effective to impart the desired intensity of butter and/or animal notes.

9. A flavored foodstuff as claimed in Claim 8 wherein the foodstuff is either a carbohydrate, a protein, bacon, beef, cheese, a cheese product, a corn product, dehydrated potatoes, dough, eggs, fish, ice cream, margarine, milk, a milk product, mutton, pork, potatoes, a potato product, poultry, veal or vegetables, or mixtures thereof.

10. A flavored foodstuff as claimed in either Claim 8 or 9 wherein the foodstuff and flavoring substances are contained in amounts to provide the desired flavor having reduced calories.

11. A method or foodstuff as claimed in any one of Claims 6, 8 to 10 wherein the sulfur-containing meat flavoring compound is either a sulfur-containing amino acid, lower alkyl mercaptan, lower alkyl sulphide, lower alkyl disulphide, aminoalkane sulphonic acid or salt thereof, inorganic sulfur compound, hydrogen sulphide, cysteine, cystine, methionine, thiamine or taurine, or any mixtures thereof.

12. A method or foodstuff as claimed in any one of Claims 6, 8 to 11 wherein the amino acid is either alanine, arginine, aspartic acid, glutamic acid, glycine histidine, iso-leucine, leucine, lysine, phenylalanine, proline, serine, trytophan, tyrosine or valine, or any mixtures thereof.

13. A method, composition or foodstuff as claimed in any preceding Claim wherein the milk-fat is either an enzyme modified butter, enzyme modified butter oil, enzyme modified cheese or enzyme modified cream, or any mixtures thereof.

14. A method, composition or foodstuff as claimed in any preceding Claim wherein the fatty material is either a fatty acid, fatty acid glyceride, babussu oil, bacon grease, butter fat, coconut oil, corn oil, cottonseed oil, fatty-pork tissue, fatty-poultry tissue, lard, olive oil, palm oil, palm kernel oil, peanut oil, rapeseed oil, safflower oil, shortening, soybean oil, sunflower oil, suet, tallow or vegetable oil or any mixtures thereof.

**Patentansprüche**

1. Verfahren zur Herstellung eines Würzstoffes mit Butter und/oder Tiermerkmalen, das umfasst, ein enzym-modifiziertes Milchfett und ein fetthaltiges Material zu vermischen, und die sich ergebende Mischung zu erhitzen, bis das Milchfett im wesentlichen mit dem fetthaltigen Material vermischt ist, wobei ein Würzstoff hergestellt wird, der die Fähigkeit hat, Nahrungsmitteln Butter- und/oder Tiermerkmale zu verleihen.

2. Verfahren nach Anspruch 1, das weiterhin Erhitzen umfasst, bis die Mischung im wesentlichen feuchtigkeitsfrei ist.

3. Verfahren nach entweder Anspruch 1 oder 2, das weiterhin umfasst, die Mischung zu verflüchtigen, bis die Mischung im wesentlichen frei von Säuren mit kurzen ketten, die aus ungefähr 3 bis ungefähr 8 kohlenstoffen bestehen, ist.

4. Verfahren nach einem der vorhergehenden Ansprüche, das weiterhin umfasst, aus der Mischung Säuren mit kurzen ketten, die aus ungefähr 3 kohlenstoffen bis zu ungefähr 8 kohlenstoffen mit einem Lösungsmittel bestehen, zu entnehmen.

5. Verfahren nach einem der vorhergehenden Ansprüche, das weiterhin folgendes umfasst: (a) Mischen einer Mischung, die ein enzym-modifiziertes Milchfett in einem Betrag von ungefähr 1 Gewichts% bis ungefähr 50 Gewichts% der Mischung und ein fetthaltiges Material umfasst, und (b) Erhitzen der sich ergebenden Mischung bei einer Temperatur von ungefähr 50°C auf ungefähr 300°C, bis das Milchfett im wesentlichen mit dem fetthaltigen Material vermischt ist.

6. Verfahren nach einem der vorhergehenden Ansprüche, das umfasst, der Mischung eine Schwefel enthaltende Fleischwürzzusammensetzung und/oder eine Aminosäure zuzusetzen, und sie zu erhitzen, bis sich ein Fleischgeschmack entwickelt hat.

7. Zusammensetzung zum Backen in schwimmendem Fett, die dazu geeignet ist, um Butter- und/oder Tiermerkmale an in ihr gebackene Nahrungsmittel abzugeben, wobei die Zusammensetzung ein enzym-modifiertes Milchfett und ein fetthaltiges Material umfasst.

8. Gewürztes Nahrungsmittel mit Butter- und/oder Tiermerkmalen, das einen Würzstoff umfasst, der durch das in einem der Ansprüche 1 bis 6 beanspruchten Verfahren hergestellt wird, welches mit einem Nahrungsmittel in einer Menge gemischt wird, die wirksam ist, um die gewünschte Intensität von Butter- und/oder Tiermerkmalen abzugeben.

9. Gewürztes Nahrungsmittel nach Anspruch 8, worin das Nahrungsmittel entweder kohlenhydrat, Protein, Speck, Rindfleisch, käse, ein käseprodukt, ein kornprodukt, entwässerte Kartoffeln, Teig, Eier, Fisch, Speiseeis, Margarine, Milch, ein Milchprodukt, Schaffleisch, Schweinefleisch, Kartoffeln, ein kartoffelprodukt, Geflügelfleisch, kalbfleisch oder Gemüse, oder Mischungen davon ist.

10. Gewürztes Nahrungsmittel nach einem der Ansprüche 8 oder 9, worin das Nahrungsmittel und die Würzstoffe in Mengen enthalten sind, um den erwünschten Geschmack mit reduzierten kalorien zu liefern.

11. Verfahren oder Nahrungsmittel nach einem der Ansprüche 6, 8 bis 10, worin die Schwefel enthaltende Fleischwürzzusammensetzung entweder ein Schwefel enthaltene Aminosäure, ein niederes Alkylmercaptan, ein niederes Alkylsulfid, ein niederes Alkyldisulfid, eine Aminoalkansulfonsäure oder ein Salz davon ist, eine anorganische Schwefelverbindung, Schwefelwasserstoff, Cystein, Cystin, Methionin, Thiamin oder Taurin, oder irgendeine Mischung davon ist.

12. Verfahren oder Nahrungsmittel nach einem der Ansprüche 6, 8 bis 11, worin die Aminosäure entweder Alanin, Arginin, Asparginsäure, Glutaminsäure, Glycinhistidin, Isoleucin, Leucin, Lysin, Phenylalanin, Prolin, Serin, Tryptophan, Tyrosin oder Valin, oder irgendeine Mischung davon ist.

13. Verfahren, Zusammensetzung oder Nahrungsmittel nach einem der vorhergehenden Ansprüche, worin das Milchfett entweder enzym-modifizierte Butter, enzym-modifiziertes Öl, enzym-modifizierter käse, enzym-modifizierte Sahne, oder irgendeine Mischung davon ist.

14. Verfahren, Zusammensetzung oder Nahrungsmittel nach einem der vorhergehenden Ansprüche, worin das fetthaltige Material entweder eine Fettsäure, Fettsäureglycerid, Babussuöl, Speckfett, Butterfett, kokosöl, kornöl, Baumwollsamenöl, fetthaltiges Schweinefleischgewebe, fetthaltiges Geflügelfleischgewebe, Schweineschmalz, Olivenöl, Palmöl, Palmkernöl, Erdnussöl, Rüböl, Safloröl, Sonnenblumenöl, Nierenfett, Talg oder Pflanzenöl oder irgendwelche Mischungen davon ist.

**Revendications**

1. Méthode de préparation de substance aromatisante prévoyant des nuances de beurre et/ou animales comportant le mélange d'un gras laitier modifié par enzyme et d'une matière grasse, et de la chauffe du mélange qui en résulte jusqu'à ce que le gras laitier soit essentiellement mélangé à la matière grasse, selon laquelle une substance aromatisante est produite ayant la faculté de transmettre aux produits alimentaires des nuances de beurre et/ou animales.

2. Méthode selon la revendication 1 comportant en outre la chauffe jusqu'à l'élimination essentielle de l'humidité mélange.

3. Méthode selon la revendication 1 ou la revendication 2 comportant également la volatilisation du mélange jusqu'à ce que le mélange soit essentiellement sans acides à chaîne courte comportant environ 3 jusqu'à environ 8 atomes de carbone.

4. Méthode selon l'une ou l'autre des revendications précédentes comportant également l'extraction à partir du mélange des acides à chaîne courte comportant de 3 à 8 atomes de carbone environ.

5. Méthode selon l'une ou l'autre des revendications précédentes comportant également (a) la préparation d'un mélange prévoyant un mélange d'env. 1% à environ 50% de gras laitier modifié par enzyme et de matière grasse, et (b) la chauffe du mélange résultant à une température d'env. 50° à 300°C jusqu'à ce que le gras laitier soit essentiellement mélangé à la matière grasse.

6. Méthode selon l'une ou l'autre des revendications précédentes prévoyant d'ajouter au mélange un composé aromatisant d'extrait de viande à teneur de soufre et/ou un amino acide, et la chauffe jusqu'à ce que l'arôme de la viande se soit développée.

7. Mélange pour friteuse apte à transmettre des nuances de beurre et/ou animales aux produits alimentaires obtenus de la friture comportant une matière à teneur de gras laitier modifié par enzyme et de matière grasse.

8. Produit alimentaire aromatisé ayant des nuances de beurre et/ou animales comportant une substance aromatisante produite par la méthode selon l'une des revendications 1 à 6 mélangé à un produit alimentaire en toute quantité utile pour attribuer l'intensité recherchée des nuances de beurre et/ou animales.

9. Produit alimentaire aromatisé selon la revendication 8, dont le produit alimentaire est éventuellement un glucide, une protéine, le lard, le boeuf, le fromage, un produit fromager, un produit céréalier, les pommes de terre lyophilisées, la pâte, les oeufs, le poisson, la crème glacée, la margarine, le lait un produit laitier, le mouton, le porc, la pomme de terre, un produit à base de pomme de terre, la volaille, le veau ou les légumes ou des mélanges y relatifs.

10. Produit alimentaire aromatisé selon la revendication 8 ou 9, dont le produit alimentaire et les substances aromatisantes sont en quantités assurant l'arôme recherché et les calories réduites.

11. Méthode ou produit alimentaire selon l'une des revendications 6, 8 à 10 dont le composé aromatisant d'extrait de viande à teneur de soufre est un des composés tels qu'un amino acide à teneur de soufre, alcoyle mercaptane inférieur, sulphide alcoyle inférieur, disulphide alcoyle inférieur, acide sulphonique aminoalcane ou son sel, composé minéral de soufre, acide hydrosulphurique, cystéine, cystine, méthionine, thiamine ou taurine, ou leurs mélanges.

12. Méthode ou produit alimentaire selon l'une des revendications 6, 8 à 11 dont l'amino acide est un des composés tels qu'analine, arginine, acide aspartique, acide glutamique, acide glycine, iso-leucine, leucine, lysine, phenylamine, proline, sérine, tryptophane, tyrosine ou valine ou leurs mélanges.

13. Méthode, préparation ou produit alimentaire selon l'une des revendications précédentes, dont le gras laitier est un beurre modifié par enzyme, une huile de beurre modifiée par enzyme, un fromage modifié par enzyme ou une crème modifiée par enzyme, ou leurs mélanges.

14. Méthode, préparation ou produit alimentaire selon l'une ou l'autre des revendications précédentes, dont la matière grasse consiste d'acide gras, glycéride d'acide gras, d'huile baboussou, de graisse de lard, de gras de beurre, d'huile de noix de coco, d'huile de maîs, d'huile de graine de coton, de tissu gras de porc, de tissu gras de volaille, de saindoux, d'huile de palme, d'huile de coeur de palmiste, d'huile d'arachide, d'huile de colza, d'huile de carthame, de graisse de cuisine, d'huile de soja, d'huile de tournseol, de graisse de boeuf, de suif ou d'huile végétale ou de leurs mélanges.